Europäisches Patentamt

European Patent Office

Office européen des brevets

(11) Veröffentlichungsnummer: **0 327 688 B1**

# (12) EUROPÄISCHE PATENTSCHRIFT

(45) Veröffentlichungstag der Patentschrift: **26.02.92**

(21) Anmeldenummer: **88119259.5**

(22) Anmeldetag: **19.11.88**

(51) Int. Cl.⁵: **G01M  11/00**

(54) **Verfahren zur kontinuierlichen Dämpfungsmessung von Lichtwellenleiter-Sensoren mit nur einem zugänglichen Ende.**

(30) Priorität: **11.02.88 DE 3804135**

(43) Veröffentlichungstag der Anmeldung:
**16.08.89 Patentblatt  89/33**

(45) Bekanntmachung des Hinweises auf die
Patenterteilung:
**26.02.92 Patentblatt  92/09**

(84) Benannte Vertragsstaaten:
**BE CH DE FR GB IT LI NL SE**

(56) Entgegenhaltungen:
**WO-A-86/01286**
**US-A- 4 446 366**
**US-A- 4 477 725**

(73) Patentinhaber: **Felten & Guilleaume Energie-technik AG**
**Schanzenstrasse 24-30 Postfach 80 50 01**
**W-5000 Köln 80(DE)**

(72) Erfinder: **Levacher, Friedrich Karl, Dr.**
**Medardusstrasse 24**
**W-5024 Brauweiler(DE)**
Erfinder: **Federmann, Helmut, Dr.**
**Holunderweg 17**
**W-5060 Bergisch Gladbach(DE)**
Erfinder: **Noack, Georg, Dr.-Ing.**
**Eschenweg 9**
**W-5060 Bergisch Gladbach(DE)**
Erfinder: **Kraus, Anton, Dipl.-Ing.**
**Olpener Strasse 124**
**W-5063 Overath-Steinenbrück(DE)**

**Beschreibung**

Die Erfindung betrifft ein Verfahren zur kontinuierlichen Dämpfungsmessung von Lichtwellenleiter-(LWL-)Sensoren nach dem Oberbegriff des Anspruchs 1. Es ermöglicht Messungen an LWL-Sensoren, bei denen nur ein Sensorende zugänglich ist.

Bei LWL-Sensoren, insbesondere solchen für mechanische Spannungen wie Zug, Biegung und Verdrehung, wird in der Regel die Dämpfungsänderung des vom Sensor übertragenen Lichtes als Kriterium für die zu detektierende Eigenschaftsänderung herangezogen. Nach dem Stand der Technik sind zur entsprechenden Dämpfungsmessung Anfang und Ende des Sensors mit einem optischen Sender bzw. Empfänger so verbunden, daß eine fortlaufende Messung möglich wird.

So ist in der DE-PS 33 05 234 ein LWL-Zugsensor beschrieben, bei dem der LWL in einen zugfesten Draht aus einer faserverstärkten Harzstruktur eingebettet und zwischen beiden eine inhomogene Zwischenschicht angeordnet ist, die heute vorzugsweise aus einer um den LWL gelegten Wendel aus Stahldraht besteht. - Ein solcher LWL-Zugsensor besitzt an seinen beiden Enden Anschlüsse für ein Licht-Durchgangsprüfgerät oder -Dämpfungsmessgerät (Sender/Empfänger). Da bei einer Dehnung des gespannten Drahtes dessen Querschnitt abnimmt, treten Querkräfte auf, die von der inhomogenen Zwischenschicht in verstärktem Maß auf den LWL übertragen werden und dort Mikrokrümmungen hervorrufen. Diese bewirken einen Dämpfungsanstieg, der gemessen und als Maß für die Dehnung benutzt wird. - So kann beispielsweise eine Spannbetonbrücke, in die solche LWL-Zug-sensoren in Belastungsrichtung eingelegt sind, überwacht werden.

Dieses Meßverfahren eignet sich jedoch nicht, wenn nur ein Ende des LWL-Sensors zugänglich ist. In diesem Fall kann die Dämpfungsmessung mit handelsüblichen Rückstreumeßgeräten vom zugänglichen Ende des Sensors aus vorgenommen werden, die zusätzlich eine Fehlerortung ermöglichen. Das derzeitige Gerätekonzept für Impulsverfahren eignet sich jedoch nicht für fortlaufende Dämpfungsmessungen und -überwachungen von bzw. mit LWL-Sensoren.

Daher liegt der Erfindung die Aufgabe zugrunde, das Verfahren zur Dämpfungsmessung von LWL-Sensoren, bei denen nur ein Sensorende zugänglich ist, kontinuierlich zu gestalten.

Diese Aufgabe wird durch die kennzeichnenden Merkmale des Anspruchs 1 gelöst. Die Lösung besteht im wesentlichen darin, daß der vom Sender ausgehende Lichtstrahl auf einen Strahlteiler trifft, von dem aus der Hauptstrahl unabgelenkt zum LWL-Sensor gelangt, den Sensor durchläuft, an dessen endseitiger Spiegelfläche reflektiert wird und wieder zurück zum Strahlteiler läuft, wo er ausgelenkt und zum Empfänger geleitet wird.

Die abhängigen Ansprüche betreffen Ausgestaltungen der Erfindung, so Anspruch 2 einen Nebenweg des Senderstrahls zum Empfänger zur Kompensation von Sender- und Empfänger-Unregelmäßigkeiten, 3 die Ausbildung der Strahlteiler als halbdurchlässiger Spiegel oder als Y-Teiler, 4 den Einsatz von Polarisatoren bei Multimode-LWL zur Vermeidung einer Direktstrahlung Sender - Empfänger, und 5 ein Referenzverfahren zur Temperaturkompensation.

Der mit der Erfindung erzielte Vorteil besteht darin, daß nunmehr eine kontinuierliche Dämpfungsmessung von LWL-Sensoren mit nur einem zugänglichen Sensorende möglich ist. Zudem ist die Meßempfindlichkeit erhöht.

Drei Ausführungsbeispiele der für das erfindungsgemäße Verfahren erforderlichen Einrichtung sind in der Zeichnung in Blockschaltbildern dargestellt, an Hand derer die Meßverfahren im folgenden näher beschrieben werden. Es zeigen

- Fig. 1 die Dämpfungs-Meßeinrichtung bei einem nur an einem Ende zugänglichen LWL-Sensor mit einem halbdurchlässigen Spiegel als Strahlteiler und Multimode-LWL für Sensor und Leitungen,
- Fig. 2 den Ersatz des Spiegels durch zwei LWL-Y-Teiler, und
- Fig. 3 eine Referenz-Meßeinrichtung mit LWL-Sensor und Referenz-LWL.

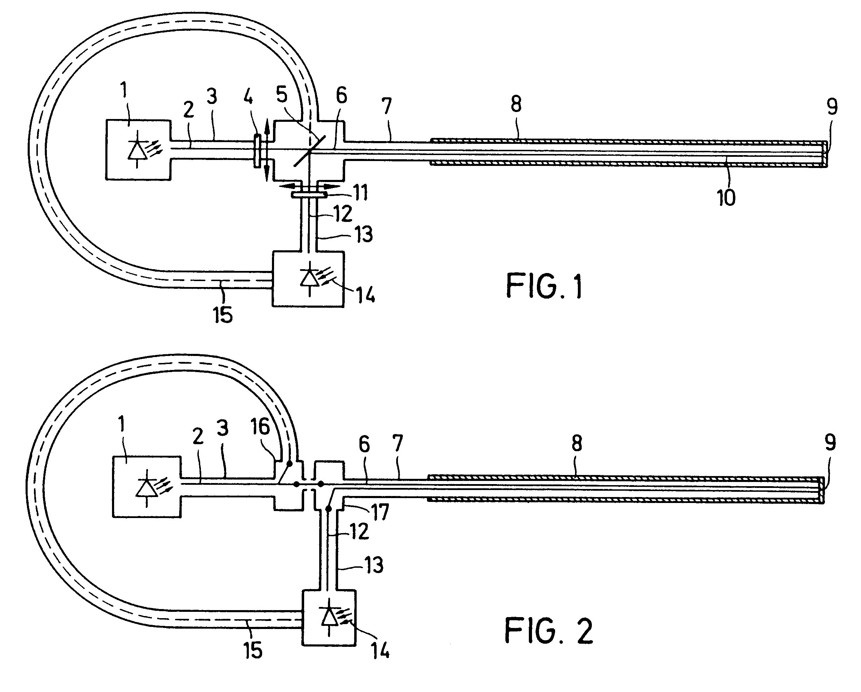

Wie Fig. 1 zeigt, gelangt das von einem handelsüblichen optischen Sender 1 ausgestrahlte, weitgehend parallele Lichtbündel 2 durch einen als Verbindungsleitung dienenden LWL 3 und einen Polarisator 4 zu einem unter 45° gegen den Lichtstrahl geneigten, halbdurchlässigen Spiegel 5. Dort wird der Strahl geteilt. Sein Hauptanteil 6 gelangt durch den Spiegel zu einer LWL-Leitung 7, die mit dem LWL-Sensor 8 verbunden ist. Am Ende des LWL-Sensors ist der planpolierte LWL verspiegelt oder mit einem aufgeklebten Spiegel 9 so abgeschlossen, daß eine Totalreflektion des Lichtstrahls entsteht.

Der reflektierte Lichtstrahl 10 gelangt durch den LWL-Sensor 8 und die LWL-Leitung 7 wieder zu dem haldurchlässigen Spiegel 5 zurück. Dort wird der für die Dämpfungsmesung benötigte Strahlanteil um 90° ausgelenkt und durch den Polarisator 11, dessen Polarisationsebene um 90° gegenüber der des Polarisators 4 gedreht ist, und durch die LWL-Leitung 13 zum Meßempfänger 14 geleitet.

Zur Erfassung der Änderung des Meßparameters, z. B. mechanische Spannung, Temperatur oder Strahlendosis, des zu überwachenden Objekts werden Sender 1 und Empfänger 14 auf eine vorgebbare Ausgangsposition eingestellt. Die in der Folgezeit auftretenden Objectänderungen führen zu Dämpfungsänderungen, die der Lichtstrahl beim zweimaligen Durchlaufen des LWL-Sensors 8 erfährt, und die vom Empfänger 14 gemessen werden.

Es wird somit genenüber der bisherigen Praxis, bei welcher der Meßempfänger am anderen Ende des LWL-Sensors angeordnet ist, eine Verdopplung der Dämpfungsänderung und damit der Meßempfindlichkeit erreicht.

Der am Spiegel 5 ausgelenkte zweite Lichtstrahl 15 (Nebenstrahl) wird zum Meßempfänger 14 geleitet und dient dort über eine Vergleichseinrichtung bekannter Art zur Kompensation eventueller Veränderungen von Senderleistung und Empfängerempfindlichkeit.

Die beiden in ihrer Polarisationsebene um 90 ° gegeneinander gedrehten Polarisationsfilter 4 und 11 sorgen dafür, daß eine unmittelbare Lichteinstrahlung vom Sender zum Empfänger weitgehend vermieden wird. Dies gilt für den Einsatz von Multimode-LWL für Leitungen und Sensor. - Kommen hierfür polarisationserhaltende Monomode-LWL zum Einsatz, dann muß auf die beiden Polarisatoren verzichtet werden, wodurch ein unmittelbarer Einfluß des Senders auf den Empfänger möglich ist.

Wie Fig. 2 zeigt, können an die Stelle des halbdurchlässigen Spiegels 5 die zwei im Senderstrahl 2 nacheinander angeordneten LWL-Y-Teiler 16 und 17 treten. Die beiden Polarisatoren entfallen. Das von dem Sender 1 ausgestrahlte, weitgehend parallele Lichtbündel 2 (Senderstrahl) gelangt hier durch die Leitung 3 zum Y-Teiler 16. Dort wird ein Teil des Senderstrahls abgezweigt (Nebenstrahl 15) und dem Empfänger 14 zugeleitet, wo er wie oben erwähnt zur Kompensation dient. Der Hauptstrahl läuft durch den Y-Teiler 17 und die Leitung 7 zum Sensor 8, durch den Sensor und wird an dessen Endspiegel 9 reflektiert. Der reflektierte Strahl 10 läuft zurück zum Y-Teiler 17, wo er abgezweigt wird und durch die Leitung 13 zum Empfänger 14 läuft.

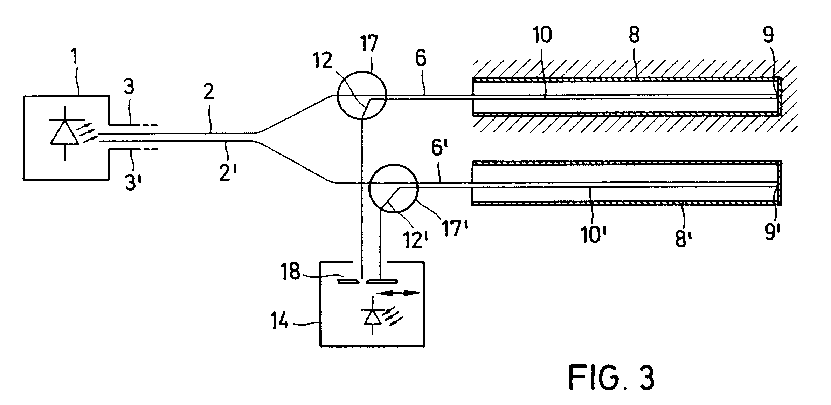

Schließlich ist in Fig. 3 eine Einrichtung zur Referenzmessung dargestellt, die zur Temperaturkompensation dient, da bei Langzeitmessungen die Temperaturabhängigkeit der Dämpfung von LWL-Sensoren berücksichtigt werden muß.

Hier sind an eine breitflächige, gleichmäßig strahlende Lichtquelle (LED oder Laser) des Senders 1 zwei im Temperaturverhalten gleichartige LWL-Leitungen 2 und 2′ angeschlossen, die je zu den Y-Teilern 17 bzw. 17′ führen. Die Y-Teiler sind ihrerseits mit dem zu messenden LWL-Sensor 8 bzw. einem Referenz-LWL 8′ verbunden, die beide an ihren Enden 9 bzw. 9′ verspiegelt sind. Dadurch werden die über die Y-Teiler eingekoppelten Strahlen 6 bzw. 6′ reflektiert, laufen (Strahlen 10 bzw. 10′) zu den Y-Teilern zurück und werden dort über die Abzweige 12 bzw. 12′ zum Empfänger 14 geleitet. An dessen Eingang treffen sie auf den Wahlschalter 18, eine verschiebbare Lochblende, der den einen oder den anderen Strahl zu der breitflächigen Fotodiode des Empfängers durchläßt.

Der Wahlschalter gibt zu jeder Dämpfungsmessung zuerst den Lichtstrahl des Referenz-LWL und anschließend den des LWL-Sensors für die Fotodiode frei. Der am Referenz-LWL gemessene Dämpfungswert gilt als Bezugsnormal für die am LWL-Sensor gemessene Dämpfung. Da der Referenz-LWL mit dem zu überwachenden Bauteil nicht mechanisch verbunden, aber in unmittelbarer Nähe des LWL-Sensors angeordnet ist, wird wegen des gleichen Temperaturverhaltens beider LWL der Temperaturgang des Sensors kompensiert. Ebenfalls werden eventuelle Veränderungen der Senderleistung wie der Empfängerempfindlichkeit, die bei Langzeitmessungen auftreten können, kompensiert.

Bezugszeichenliste:

| | |
|---|---|
| 1 | Lichtsender |
| 2 | Senderstrahl (vom Sender ausgestrahltes Lichtbündel) |
| 3 | LWL-Leitung: Sender - Strahlteiler |
| 4 | Polarisator im Senderstrahl |
| 5 | Halbdurchlässiger Spiegel als Strahlteiler |
| 6 | Sender-(Haupt-)strahl zum Sensor |
| 7 | LWL-Leitung: Strahlteiler - Sensor |
| 8 | LWL-Sensor |
| 9 | Spiegel am Sensorende oder spiegelpolierte Fläche des Sensorendes |
| 10 | Reflektierter Strahl |
| 11 | Polarisator im Empfängerstrahl |
| 12 | Empfängerstrahl |
| 13 | LWL-Leitung: Strahlteiler - Empfänger |
| 14 | Lichtempfänger |
| 15 | Nebenstrahl: (Sender) - Strahlteiler - Empfänger |
| 16 | Y-Teiler (senderseitig) |
| 17 | Y-Teiler |
| 18 | Wahlschalter (verschiebbare Blende) im Empfänger |
| X′ | Korrespondierende Elemente bei der Referenz-Meßeinrichtung. |

**Patentansprüche**

1.  Verfahren zur kontinuierlichen Dämpfungsmessung von Lichtwellenleiter-(LWL-) Sensoren, bei dem von einem Sender (1) ein Lichtbündel (2) kontinuierlich ausgestrahlt und der Senderstrahl durch eine LWL-Leitung (3) zu dem LWL-Sensor (8) geleitet wird, den er durchläuft, wonach er durch eine weitere LWL-Leitung (13) zu einem Empfänger (14) gelangt, dadurch gekennzeichnet,

- daß der Senderstrahl (2) auf dem Weg zum Sensor (8) auf eine Strahlteiler-Einrichtung (5, 16 + 17) trifft,
- von der aus der Hauptstrahl (6) unabgelenkt durch eine LWL-Leitung (7) zu dem LWL-Sensor (8) gelangt, den Sensor durchläuft, an dessen endseitiger Spiegelfläche (9) reflektiert wird und durch den Sensor (8) und die Leitung (7) wieder zum Strahlteiler (5, 17) zurückläuft,
- wo er ausgelenkt und durch die weitere LWL-Leitung (13) zu dem Empfänger (14) geleitet wird.

2. Meßverfahren nach Anspruch 1, dadurch gekennzeichnet, daß im Strahlteiler (5, 16) vom Senderstrahl (2) ein Nebenstrahl (15) ausgelenkt und durch eine LWL-Leitung direkt zum Empfänger (14) geführt wird, wo er über eine Vergleichseinrichtung zur Kompensation eventueller Veränderungen von Senderleistung und Empfängerempfindlichkeit dient.

3. Meßverfahren nach Anspruch 2, dadurch gekennzeichnet, daß als Strahlteiler-Einrichtung ein gegenüber dem Senderstrahl (2) um 45° geneigter, halbdurchlässiger Spiegel (5) oder zwei im Senderstrahl (2) hintereinander angeordnete LWL-Y-Teiler (16 u. 17) dienen.

4. Meßverfahren nach Anspruch 3, dadurch gekennzeichnet, daß - beim Einsatz von Multimode-, also depolarisierend wirkenden, LWL für Sensor und Leitungen zur Vermeidung einer direkten Strahlung vom Sender zum Empfänger - vor dem Spiegel (5) der Senderstrahl (2) durch einen Polarisator (4), und nach ihm der Empfängerstrahl (12) durch einen zweiten Polarisator (11) läuft, dessen Polarisationsebene genenüber der ersten um 90° gedreht ist.

5. Meßverfahren nach Anspruch 1, dadurch gekennzeichnet, daß es zur Temperaturkompensation als Referenzverfahren wie folgt betrieben wird:

- Von der breitflächigen, gleichmäßig strahlenden Lichtquelle (LED oder Laser) des Senders (1) aus werden zwei gleiche Lichtstrahlen, Meßstrahl (2) und Referenzstrahl (2′), durch zwei im Temperaturverhalten gleiche LWL-Leitungen (3, 3′) zu zwei Y-Teilern (17, 17′) geleitet,
- der Hauptstrahl (6) läuft weiter zum LWL-Sensor (8), der mit dem zu überwachenden Bauteil fest verbunden ist, durch den Sensor, wird an dessen endseitiger Spiegelfäche (9) reflektiert und läuft wieder zurück zu seinem Y-Teiler (17),

- dementsprechend läuft der Referenzstrahl (6′) durch einen Referenz-LWL (8′) mit endseitiger Spiegelfläche, der mit dem zu überwachenden Bauteil nicht mechanisch verbunden, aber in unmittelbarer Nähe des LWL-Sensors (8) angeordnet ist, und zurück zu seinem Y-Teiler (17′),
- und die beiden zurücklaufenden Strahlen (10, 10′) werden von den Y-Teilern ausgelenkt (Empfängerstrahlen 12 u. 12′) und über LWL-Leitungen zum Empfänger (14) geleitet, der mit einer großflächigen Fotodiode ausgestattet ist, und
- wo zur Dämpfungsmessung von einem Wahlschalter (18) zuerst der Weg des Referenzstrahls (12′), und anschließend der des Meßstrahls (12) zur Fotodiode freigegeben wird.

## Claims

1. A method for continuously measuring the attenuation of light wave guide sensors, wherein a light beam (2) is continuously emitted by a transmitter (1) and the transmitter beam is conducted through a light wave guide conductor (3) to the light wave guide sensor (8), through which it passes, after which it travels through a further light wave guide conductor (13) to a receiver (14), characterised

- in that the transmitter beam (2) impinges on a beam divider device (5, 16 + 17) on the way to the sensor (8),
- from there the main beam (6) travels undeflected through a light wave guide conductor (7) to the light wave guide sensor (8), passes through the sensor, is reflected at the mirror surface (9) at the end thereof and travels back again through the sensor (8) and the conductor (7) to the beam divider (5, 17)
- where it is deflected and conducted through the further light wave guide conductor (13) to the receiver (14).

2. A measuring method according to claim 1, characterised in that in the beam divider (5, 16) a secondary beam (15) is deflected from the transmitter beam (2) and is guided through a light wave guide conductor directly to the receiver (14) where it serves to compensate any changes in the transmitter output and receiver sensitivity by way of a comparison device.

3. A measuring method according to claim 2, characterised in that a semipermeable mirror (5) inclined 45° in relation to the transmitter beam (2) or two light wave guide Y-dividers (16 and 17) arranged one after the other in the transmitter beam (2) serve as the beam divider device.

4. A measuring method according to claim 3, characterised in that - when multimode light wave guides, i.e. those acting in a depolarising manner, are used for sensor and conductors in order to avoid direct radiation from the transmitter to the receiver - in front of the mirror (5) the transmitter beam (2) passes through a polarizer (4) and after it the receiver beam (12) passes through a second polarizer (11), the polarization plane of which is rotated 90° in relation to the first one.

5. A measuring method according to claim 1, characterised in that it is implemented as follows as a reference method for the purpose of temperature compensation:
   - from the broad-surface, evenly emitting light source (LED or laser) of the transmitter (1) two identical light beams, the measuring beam (2) and the reference beam (2') are conducted through two light wave guide conductors (3, 3'), alike in their thermal behaviour, to two Y-dividers (17, 17'),
   - the main beam (6) travels onwards to the light wave guide sensor (8), securely connected to the component to be monitored, passes through the sensor, is reflected at the mirror surface (9) at the end thereof and travels back again to its Y-divider (17),
   - the reference beam (6') correspondingly travels through a reference light wave guide (8') with a mirror surface at the end, not connected mechanically to the component for monitoring but disposed in the immediate vicinity of the light wave guide sensor (8), and travels back to its Y-divider (17'),
   - and the two returning beams (10, 10') are deflected by the Y-dividers (receiver beams 12 and 12') and are guided by way of light wave guide conductors to the receiver (14) which is equipped with a large-area photodiode, and
   - where, for the purpose of attenuation measurement, the path of the reference beam (12') firstly and then that of the measurement beam (12) is released to the photodiode by a selector switch (18).

## Revendications

1. Procédé de mesure en continu de l'atténuation de capteurs à fibres optiques selon lequel un émetteur (1) émet en continu un faisceau lumineux (2) qui traverse un guide à fibres optiques (3) pour arriver dans un capteur à fibres optiques (8) pour le traverser et arriver sur un récepteur (14) en passant par une autre ligne à fibres optiques (13), procédé caractérisé en ce que :
   - le faisceau émis (2) arrive sur un diviseur de faisceau (5, 16 + 17) sur son trajet vers le capteur (8),
   - le faisceau principal (6) est dévié à partir du diviseur pour passer par une ligne à fibres optiques (7) et arriver sur le capteur à fibres optiques (8), traverser ce capteur, être réfléchi par son extrémité formée par une surface de miroir (9) et revenir de nouveau vers le diviseur de faisceau (5, 17) à partir du capteur (8) et par la ligne (7),
   - où il est dévié et est conduit à travers une autre ligne à fibres optiques (13) vers le récepteur (14).

2. Procédé de mesure selon la revendication 1, caractérisé en ce que dans le diviseur de faisceau (5, 16), un faisceau auxiliaire (15) est séparé du faisceau émis (2) pour être envoyé directement au récepteur (14) à travers une ligne à fibres optiques, et dans le récepteur il sert à une installation de comparaison pour compenser d'éventuelles variations de puissance d'émetteur et de sensibilité de récepteur.

3. Procédé de mesure selon la revendication 2, caractérisé en ce que le diviseur de faisceau est un miroir semi-transparent (5) incliné par rapport au faisceau émis (2) ou encore deux diviseurs en Y, à fibres optiques (16, 17) placés l'un derrière l'autre dans le faisceau émis (2).

4. Procédé de mesure selon la revendication 3, caractérisé en ce qu'il utilise des fibres optiques en multimode, c'est-à-dire à effet dépolarisant pour le capteur et les lignes, pour éviter l'émission d'un rayonnement direct de l'émetteur vers le récepteur, en avant du miroir (5) dans le faisceau émis (2) traversant un premier polarisateur (4) et après celui-ci le faisceau de récepteur (12) traverse un second polarisateur (11) dont le plan de polarisation est tourné de 90° par rapport à celui du premier polarisateur.

5. Procédé de mesure selon la revendication 1, caractérisé en ce que la compensation en température est assurée par un procédé de référence comme suit :

- la source lumineuse (LED ou laser) à émission régulière, de grande surface de l'émetteur (1) fournit deux faisceaux lumineux identiques, un faisceau de mesure (2) et un faisceau de référence (2') qui sont envoyés par deux guides à fibres optiques (3, 3') à comportement identique en température vers deux diviseurs en Y (17, 17'),
- le faisceau principal (6) continue vers le capteur à fibres optiques (8) solidaire de la pièce à surveiller, traverse le capteur pour être réfléchi par son miroir d'extrémité (9) et revenir vers le diviseur en Y (17),
- en fonction de cela, le faisceau de référence (6') traverse un guide à fibres optiques (8') de référence avec une surface d'extrémité en miroir, ce guide n'étant pas relié mécaniquement à la pièce à contrôler mais est placé au voisinage immédiat du capteur à fibres optiques (8) pour revenir vers son diviseur Y (17),
- et les deux faisceaux en retour (10, 10') sont séparés des diviseurs en Y (faisceaux d'émetteur 12, 12') pour être envoyés par des lignes à fibres optiques vers le récepteur (14) équipé d'une photodiode de grande surface, et
- la mesure de l'atténuation est faite par un sélecteur (18) qui libère tout d'abord le chemin du faisceau de référence (12') puis celui du faisceau de mesure (12) vers la photodiode.

FIG. 1

FIG. 2

EP 0 327 688 B1

FIG. 3